Europäisches Patentamt

European Patent Office

Office européen des brevets

(11) Publication number: **0 421 169 B1**

## EUROPEAN PATENT SPECIFICATION

(45) Date of publication of patent specification: **22.03.95**

(51) Int. Cl.6: **B01J 23/63**, B01D 53/62, B01D 53/94

(21) Application number: **90117677.6**

(22) Date of filing: **13.09.90**

The file contains technical information submitted after the application was filed and not included in this specification

(54) **Catalyst for the oxidation of carbon monoxide.**

(30) Priority: **05.10.89 US 417383**

(43) Date of publication of application:
**10.04.91 Bulletin 91/15**

(45) Publication of the grant of the patent:
**22.03.95 Bulletin 95/12**

(84) Designated Contracting States:
**DE FR GB IT NL**

(56) References cited:
**EP-A- 0 306 945**
**GB-A- 1 299 666**

**PATENT ABSTRACTS OF JAPAN vol. 13, no. 195 (E-754)(3543), 10 May 1989; & JP - A - 115991 (MITSUBISHI HEAVY IND LTD) 19.01.1989**

**CHEMICAL ABSTRACTS vol. 107, no. 4, 27 July1987, page 277, abstract no. 27727g, Columbus, Ohio, US; A. NISHINO et al.:"Studies on carbon monoxide oxidizing performance of molded catalyst composedof calcium aluminate-metal oxides. III. Carbon monoxide oxidation on platinium-palladium catalysts**

supported on calcium aluminate-silicon dioxide-titaniumdioxide molds

(73) Proprietor: **Hughes Aircraft Company**
**7200 Hughes Terrace**
**P.O. Box 45066**
**Los Angeles, California 90045-0066 (US)**

(72) Inventor: **Moser, Thomas P.**
**2322A Carnegie Lane**
**Redondo Beach,**
**California 90278 (US)**

(74) Representative: **KUHNEN, WACKER & PARTNER**
**Alois-Steinecker-Strasse 22**
**D-85354 Freising (DE)**

## Description

The present invention relates generally to a catalytic composite for converting carbon monoxide and oxygen into carbon dioxide. More particularly, the present invention relates to a titania-supported platinum/cerium catalytic, composite for reacting carbon monoxide (CO) and oxygen ($O_2$) to form carbon dioxide at a temperature within the range of 50 to 150°C wherein said $O_2$ is present at or below a stoichiometric amount.

In a carbon dioxide ($CO_2$) laser system, carbon dioxide is used as the active lasing medium. The carbon dioxide is contained in a sealed laser cavity which also houses a pair of electrodes for applying an electric discharge to the carbon dioxide. Upon application of the electric discharge, laser emission is produced by the $CO_2$. However, the electric discharge also dissociates the $CO_2$ into carbon monoxide (CO) and atomic oxygen (O), as indicated by Equation (1) below.

$$CO_2 \rightarrow CO + O \qquad (1)$$

The atomic oxygen so formed then reacts with itself to form molecular oxygen ($O_2$) as shown in Equation (2).

$$O + O \rightarrow O_2 \qquad (2)$$

The net reaction is the conversion of carbon dioxide to carbon monoxide and molecular oxygen as shown in Equation (3).

$$CO_2 \rightarrow CO + 1/2\ O_2 \qquad (3)$$

The oxygen formed by this process causes a rapid loss in laser power and other erratic discharge behavior including arcing. Thus, it is desirable to remove this oxygen. To accomplish this result, it has been the practice in the art to use a catalyst to promote the reaction of the CO and $O_2$ to re-form the $CO_2$ starting material. One such catalyst comprises an electrically heated platinum wire which operates at 1000°C, as disclosed, for example, by D.S. Stark and M.R. Harris, in the publication "Platinum-Catalysed Recombination of CO and $O_2$ in Sealed $CO_2$ TEA Laser Gases," J. Phys. E: Sci Instrum, Vol. 11, 1978, pages 316-319. However, the use of this high temperature is undesirable because it requires increased power input and generates heat, which may lead to distortion of the laser cavity or optical bench. Another catalyst which has been used for this purpose is Hopcalite, as disclosed, for example, by R.B. Gibson et al, in the publication "Sealed Multiatmosphere $CO_2$ TEA Laser: Seed-gas Compatible System Using Unheated Oxide Catalyst," Appl. Phys. Lett., Vol. 32, No. 11, 1978, pages 726-727. Hopcalite is a mixture of 60 percent magnesium oxide and 40 percent cuprous oxide that is provided in powder or granular form, and is available from Mine Safety Appliances Company of Evans City, Pennsylvania. Unfortunately, very small particulates from the granules become dispersed throughout the laser cavity and cover the optical elements, thus degrading the laser performance. In addition, Hopcalite has been found to rapidly deactivate when stored in a laser gas mixture or in the presence of water. Other catalysts which have been used for this purpose comprise mixtures of noble metal catalysts on ceramic substrates, as disclosed for example in U.S. Patent No. 4,639,432. However, such catalysts are sensitive to contamination or lack the required activity.

EP-A-0 306 945 discloses a catalyst comprising titania and Pt and/or Pd which is prepared by a process comprising one step of heating Pt and/or Pd-impregnated titania with a reducing gas, in particular with free hydrogen.

Consequently, there exists in the field of carbon dioxide lasers the need for a catalyst for removing oxygen and, in particular, for reacting the oxygen and carbon monoxide by-products to form carbon dioxide, which is effective at relatively low temperature and is not easily contaminated. Such a catalyst would also be desirable for other applications where carbon monoxide and oxygen are combined to form carbon dioxide or where oxygen must be removed in the presence of carbon monoxide.

SUMMARY OF THE INVENTION

The general purpose of this invention is to provide a low temperature catalytic composite for reacting carbon monoxide and oxygen to form carbon dioxide. This catalytic composite possesses all of the advantages of the prior art catalysts discussed above while overcoming their above-noted significant disadvantages.

The above general purpose of the present invention is accomplished by a method for preparing a titania-supported platinum/cerium catalyst to catalyse the reaction of carbon monoxide (CO) and oxygen ($O_2$) to form carbon dioxide at a temperature within the range of 50 to 150°C wherein said $O_2$ is present at or below a stoichiometric amount by exposing said CO and $O_2$ at said temperature to a catalytic composite wherein the improvement comprises the steps of providing titania in the form of a porous structure having an average pore diameter within the range of 0.005 to 0.04 micrometers; impregnating said titania substrate with a solution comprisidong a chloride-free chemical complex of platinum and a chloride free cerium salt to form a wetted impregnated substrate having uniform distribution of said nobel metal throughout said substrate; drying said wetted impregnated substrate in air; exposing said dried impregnated substrate to flowing helium at about 200°C to form an activated catalytic composite; and exposing said activated catalytic composite to flowing oxygen at about 400°C, whereby said catalytic composite possesses catalytic activity throughout said porous structure of said substrate to thereby enhance said catalytic activity.

In another alternative embodiment of the present invention, the above-described catalytic composite is incorporated into a carbon dioxide laser system.

The above general purpose of the present invention is further accomplished by providing a titania-supported platinum/cerium catalytic composite for reacting carbon monoxide (CO) and oxygen ($O_2$) to form carbon dioxide at a temperature within the range of 50 to 150°C wherein said $O_2$ is present at or below a stoichiometric amount comprising a catalyst comprising of platinum metal and cerium metal or oxide of cerium; and a titania substrate supporting said catalyst, said catalytic composite being prepared by a process comprising the steps of providing said titania in the form of a porous structure having an average pore diameter within the range of 0.005 to 0.04 micrometers; impregnating said titania substrate with a solution comprising a chloride-free chemical complex of platinum and a chloride free cerium salt to form a wetted impregnated substrate having uniform distribution of said metals throughout said substrate; drying said wetted impregnated substrate in air; exposing said dried impregnated substrate to flowing helium at about 200°C to form an activated catalytic composite; and exposing said activated catalytic composite to flowing oxygen at about 400°C, whereby said catalytic composite possesses catalytic activity throughout said porous structure of said substrate to thereby enhance said catalytic activity.

Preferred embodiments of the present invention are claimed in the subclaims.

The above-discussed and many other features and attendant advantages of the present invention will become better understood by reference to the following detailed description when considered in conjunction with the accompanying drawings.

## BRIEF DESCRIPTION OF THE DRAWINGS

FIG. 1 presents curves indicating the activity of catalytic composites of the present invention for removing oxygen.

FIG. 2 presents curves indicating the activity of catalytic composites of the present invention for removing carbon monoxide.

FIG. 3 presents curves comparing the activity of a catalytic composite of the present invention for removing oxygen with the activity of a known catalyst.

## DESCRIPTION OF THE PREFERRED EMBODIMENTS

The catalytic composite used in the method of the present invention comprises a platinum/ cerium catalyst on a titania ($TiO_2$) support. This catalytic composite has been found to have unexpectedly high catalytic activity at moderate temperature, that is, 50 to 150°C, for the conversion of carbon monoxide and oxygen to carbon dioxide. Unlike alumina or silica support materials which are commonly used for their inert properties, titania exhibits a unique interaction with platinum and palladium that I have discovered results in very low activation energies, namely about 5 kilocalories per mole of $O_2$, at low temperature for the reaction of CO and $O_2$. These catalytic composites are particularly useful in a carbon dioxide laser system since they overcome the prior art problems caused by elevated temperatures or contamination, as previously discussed. These catalytic composites are also useful for other applications where it is necessary or desirable to maintain a relatively low temperature for the reaction of carbon monoxide and oxygen to form carbon dioxide.

According to the present invention, catalytic activity is significantly increased by incorporating cerium or an oxide thereof, such as $CeO_2$ or $Ce_2O_3$, along with the platinum to serve as the catalyst.

A preferred catalytic composite in accordance with the present invention is formed by impregnating titania pellets with platinum. The pellets are chosen to have a wide pore diameter which allows for rapid diffusion of the catalyst into the pellets. Pellets having a diameter of 1/16 to 1/4 inch (0.16 to 0.64 cm) are suitable for the present catalytic composite. Average pore diameters of 0.005 to 0.04 micrometers are suitable, with 0.01 to 0.03 micrometers being preferred. Suitable $TiO_2$ pellets are available from Norton Company of Akron, Ohio. The titania substrate in accordance with the present invention may be in a form other than pellets, such as a monolith, reticulated monolith, or plates. However the pellet form is preferred.

The $TiO_2$ pellets are impregnated, preferably by the incipient wetness technique, with a solution comprising a chemical complex of the chosen catalyst, i.e., platinum, and cerium , and a suitable solvent, such as water. The impregnated pellets are dried, heated at about 200°C in helium, and then calcined in flowing oxygen at about 400°C. It has been found that chloride-free noble metal salts, such as tetraammine-platinum (II) nitrate, $[Pt(NH_3)_4](NO_3)_2$, produce catalytic composites having catalytic performance superior to composites formed from chloride-containing noble metal complexes, such as hexachloroplatinic acid-6-hydrate, $H_2PtCl_6 \cdot 6H_2O$. Using chloride-free noble metal salts and the incipient wetness technique in accordance with the present invention, uniform distribution of the noble metal throughout the titania substrate is produced. The noble metal preferably comprises 0.1 to 5 percent by weight of the composite. The term "impregnation" is used herein in its accepted meaning of forcing a liquid substance into the spaces of a porous solid. This impregnation maximizes the utilization of the substrate surface area in and throughout the entire pellet.

It is preferred that the total metal content of the composite be within the range of 2 to 5% by weight.

While the previous discussion has been focused on the impregnation of the metal salt into the substrate, it is not intended to so limit the present invention. Rather, the improved catalytic activity of the present method is achieved by using a platinum catalyst on a titania substrate where intimate contact between the catalyst and substrate is achieved by other means besides impregnation.

In accordance with the present invention, cerium or an oxide thereof is incorporated into the catalytic composite of the present invention. The cerium is provided in the form of a metal salt, preferably a chloride-free salt such as cerium nitrate, $Ce(NO_3)_3 \cdot 6H_2O$. The cerium salt solution is mixed with the platinum salt solution and the mixture is impregnated into the $TiO_2$ pellets as described above. The cerium is provided in sufficient amounts to yield 1 to 2 percent by weight cerium in the composite. While the cerium is provided in the impregnating solution in the form of the metal ion, it is believed that part or all of the cerium is oxidized in the subsequent processing steps to form an oxide, such as $CeO_2$ and/or $Ce_2O_3$.

Optionally, minor amounts of other metals such as nickel, copper, or manganese may be co-impregnated with the platinum in the composites of the present invention. The incorporation of these other metals may be desirable in order to promote oxygen adsorption. These metals are typically used in the amount of 0.001 to 0.05 percent by weight of the composite.

Catalytic composites in accordance with the present invention were tested for activity using an integral flow reactor as described in Example 3 herein. The series of catalytic composites tested comprised: (a) 2.0 wt. % Pt and 2.0 wt. % Ce on $TiO_2$; (b) 2.0 wt. % Pd and 2.0 wt. % Ce on $TiO_2$; (c) 3.8 wt. % Pt on $TiO_2$; and (d) 4.4 wt. % Pd on $TiO_2$. Using the data obtained from the gas analysis of the output gas from the reactor, the catalytic activity for both carbon monoxide and oxygen disappearance was calculated using the following equation:

$$\text{Activity} = \frac{Q\,(x_i^{\text{inlet}} - x_i^{\text{outlet}})}{V_c}$$

where

Q = flow rate across catalyst bed (standard $cm^3$/min)

$X_i$ = mole fraction (i = $O_2$, CO)

$V_c$ = volume of catalyst bed including void volume ($cm^3$).

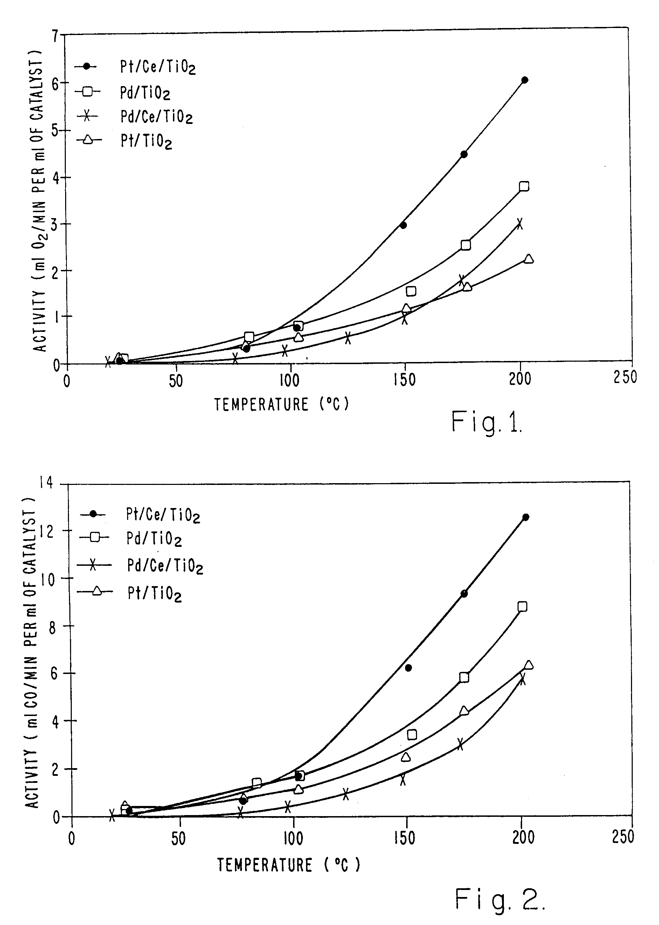

FIGS. 1 and 2 present curves showing these results for each of the catalytic composites, indicating respectively, the $O_2$ disappearance activity and the CO disappearance activity at various temperatures of the catalyst bed. The term "Activity (ml $O_2$/min per ml of catalyst)" in FIG. 1 indicates the decrease in the amount of oxygen, expressed as milliliters of oxygen per minute per milliliter of catalyst. Similarly, in FIG. 2, "Activity" indicates the decrease in the amount of carbon monoxide. The decrease in the amounts of oxygen and carbon monoxide is directly related to the amount of carbon dioxide which is formed from these reactants, as indicated in Equation (4) below.

$$CO + 1/2 \, O_2 \rightarrow CO_2 \qquad (4)$$

As can be seen from FIGS. 1 and 2, the $Pt/Ce/TiO_2$ catalyst demonstrated the highest activity throughout the 25 to 200°C temperature range. The $Pd/Ce/TiO_2$ catalyst was less active than the $Pt/Ce/TiO_2$ catalyst and also less active than the $Pd/TiO_2$ catalyst. The $Pt/TiO_2$ catalyst was the least active of the series. These results suggest a distinct synergistic effect between Pt and Ce which was not apparent between Pd and Ce. Moreover, it was found that the simple impregnation of Ce onto $TiO_2$ yielded an inactive material. In addition, the specific activity of the $Pt/Ce/TiO_2$ composite was found to be approximately twice that of the $Pt/TiO_2$ composite of the present invention for temperatures above 100°C. The magnitude of this increase in activity due to the incorporation of cerium is unexpectedly high.

Inasmuch as alumina ($Al_2O_3$) is one of the most commonly used catalyst support materials, a direct comparison was made of the catalyst activity of a catalyst comprising 2.0 wt. % Pt and 2.0 wt. % Ce on a gamma alumina support and a catalytic composite of the present invention comprising 2.0 wt. % Pt and 2.0 wt. % Ce on a titania support.

The alumina support was provided as 3.2 mm diameter spheres, obtained from Grace Chemical Company of Lexington, Massachusetts, and consisting primarily of gamma phase alumina. The surface area was 110 $m^2$/gram, as measured by the Brunauer, Emmett, and Teller (BET) method. The alumina support was impregnated with Pt and Ce using the incipient wetness technique described in Example 2. The catalytic composite in accordance with the present invention was prepared as described in Example 2.

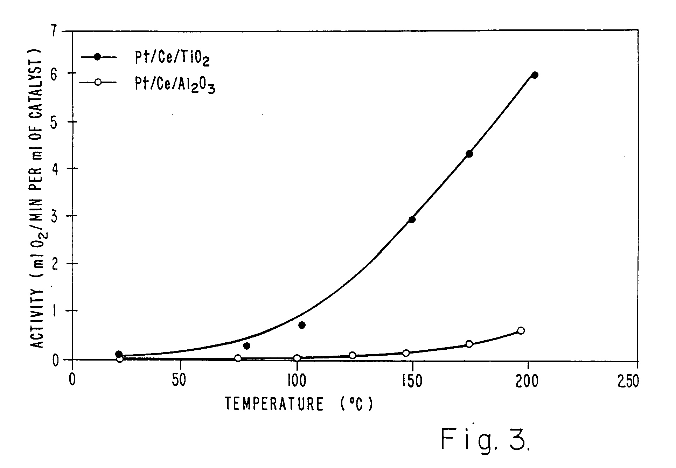

These catalysts were tested in an integral flow reactor as described above. FIG. 3 presents curves showing the results for each catalyst, indicating the $O_2$ disappearance activity at various temperatures of the catalyst bed. Since the titania and alumina pellets had different particle densities, the activities were normalized on a volume basis, as indicated in FIG. 3. Despite having a much lower surface area (34 versus 110 $m^2$/gram), the $Pt/Ce/TiO_2$ catalyst of the present invention was considerably more active than the $Pt/Ce/Al_2O_3$ catalyst. Whereas the $Pt/Ce/TiO_2$ catalyst of the present invention demonstrated considerable activity between 25 to 100°C, the $Pt/Ce/Al_2O_3$ catalyst was inactive in the same temperature range. The addition of cerium apparently helps to balance the relatively weak adsorption of oxygen with the strong adsorption of carbon monoxide. Furthermore, as suggested by the above results, this "oxygen storage" property appears to be directly linked to a chemical interaction between Pt, Ce, and $TiO_2$.

The catalytic composites in accordance with the present invention were also tested in a closed cycle $CO_2$ transversely excited (TE) laser, as described in Example 4 herein. Laser operation in excess of $10^6$ continuous shots at 100 hertz was accomplished with the $Pt/Ce/TiO_2$ catalyst composite of the present invention at a temperature between 75 to 95°C.

The catalytic composites used in the method of the present invention are effective for promoting the reaction of carbon monoxide and oxygen to form carbon dioxide even when the oxygen is present at a concentration which is at or below the stoichiometrically required amount. This effect is believed to be due to the fact that the present composites are good oxygen adsorbers. By contrast, known catalysts require the presence of oxygen in large stoichiometric excess in order to be effective. In addition, the present catalytic composites are effective in the presence of a high concentration of carbon dioxide. In some previously used catalysts, the catalyst was poisoned by adsorption of carbon dioxide thereon and was rendered ineffective. Thus, the catalytic composites of the present invention are very well suited for use in a carbon dioxide laser system in which the laser gas typically comprises under operating conditions about 20 percent carbon dioxide, about 20 percent nitrogen, about 0.5 percent oxygen, and about 1 percent carbon monoxide. Example 3 herein discusses the performance of the present catalytic composite in an integral flow reactor using a $CO_2$ laser gas mixture and Example 4 herein discusses the performance of the present catalytic composite in an operating $CO_2$ laser.

EXAMPLE 1 (Comparative)

This example illustrates a method for the preparation of catalytic composites comprising $Pt/TiO_2$ and $Pd/TiO_2$.

The titania support was provided as pellets comprising one-eighth inch (0.32 cm) extrudates of a mixture of 90 percent anatase phase and 10 percent rutile phase, and was obtained from Norton Company of Akron, Ohio. Using the Brunauer, Emmett, and Teller (BET) method, the surface area was determined to be 34 $meters^2$ per gram, and the average pore diameter was then calculated to be 73 angstroms. One catalytic composite was prepared using tetraammineplatinum (II) nitrate, and a second catalytic composite was prepared using tetraamminepalladium (II) nitrate.

The incipient wetness technique was used to impregnate blank (fresh) titania ($TiO_2$) pellets with platinum or palladium. The specific pore volume of the titania pellets was determined by measuring the saturation volume (pore volume as measured for a specific solvent) volumetrically with water. Once this saturation volume was known, a volumetric solution of the appropriate metal salt was prepared with a prescribed concentration level. This quantitative solution was then mixed with the appropriate mass of blank titania pellets, resulting in the physical adsorption of the solution on the surface and into the interior of the pellets. The $Pt/TiO_2$ catalyst was prepared with 5.181 g of $TiO_2$ pellets and 1.84 ml of a solution containing 0.234 g of platinum salt per ml water. The $Pd/TiO_2$ catalyst was prepared with 103.0 g $TiO_2$ pellets and 36.7 ml of a solution containing 0.423 g of palladium salt per ml water. A slight excess (about 5%) of solution was used in the impregnation procedure to allow uniform and complete saturation of the titania pellets. The residual solution was retained for recovery and analysis. The catalytic composite preparation was completed by slowly drying the "wetted" catalytic composite in a flowing air hood, followed by activation in flowing helium at about 200°C for 2 hours, and calcination in flowing oxygen at about 400°C for 4 hours. The metal loading was determined by a material balance, taking into account the concentration of metal in the solution, the saturation volume of the titania support material, and the residual metal recovered. The two composites were determined to comprise 3.8 wt. % Pt and 4.4 wt. % Pd, respectively.

These catalytic composites were tested for catalytic activity as discussed in Example 3.

EXAMPLE 2

This example illustrates a method for the preparation of a catalytic composite used in the method of the present invention, comprising Pt/Ce on $TiO_2$.

The general procedure described in Example 1 was followed using as the impregnating solution a mixture comprising tetraammineplatinum (II) nitrate and cerium nitrate. For 444.6 g of $TiO_2$ pellets, 158 ml of a solution containing 0.117 g of platinum salt per ml water, and 0.188 g of cerium salt per ml water was used. The composite was determined to comprise 2.0 wt. % Pt and 2.0 wt. % Ce.

Scanning electron micrographs (SEM) of the $Pt/Ce/TiO_2$ catalytic composite prepared above were obtained with a Cambridge Stereoscan 250 Mk 3 Scanning Electron Microscope equipped with an EDAX PV9100 Energy Dispersive X-ray (EDX) analysis system. Micrographs were obtained with a backscattering detector, while a windowless detector was employed for EDX elemental detection down to the atomic weight of carbon.

The longitudinal cross section of the pellet showed a random distribution of Pt and Ce within the pores of the pellet. In addition, the extent of titania reduction or perhaps the density variation throughout the pellet was indicated qualitatively by a dark "band" about the pellet.

Using a backscattering SEM image technique, a mapping of the Pt/Ce distribution was obtained. These micrographs showed the dendritic crystal growth of both Pt and Ce in the $TiO_2$ matrix. EDX analysis of the exterior of the pellet indicated considerable amounts of Pt and Ce. By contrast, except for the outermost perimeter of the catalyst pellet, the dark portion of the catalyst pellet was void of both Pt and Ce as indicated by the EDX spectrum.

Information concerning the oxidation states of Pt, Ce and Ti was obtained by Electron Spectroscopy for Chemical Analysis (ESCA). This information lends insight into the redox (reduction/oxidation) mechanism functioning at the catalytic surface. A Perkin Elmer 5500 ESCA/SAM with MgK$\alpha$ X-rays was used with a chamber pressure of approximately $10^{-9}$ torr. Spectra were referenced to the C ls covalent peak at 284.6 eV. In the Pt 4f ESCA spectrum, the Pt $4f_{7/2}$ peak at 70.6 eV and the Pt $4f_{5/2}$ peak at 73.9 eV corresponded to metallic platinum. A curve fitting analysis indicated the presence of both PtO (oxidation state of $Pt^{+2}$) and $PtO_2$ (oxidation state of $Pt^{+4}$). Likewise, the Ce 3d ESCA spectrum also indicated multiple cerium oxidation states. The Ce 3d peaks at both 885.3 and 903.6 eV corresponded to metallic cerium. The fitted Ce 3d peak at 881.2 eV is associated with $Ce_2O_3$ (oxidation state of $Ce^{+3}$), whereas the fitted peak at 899.5 eV is associated with $CeO_2$ (oxidation state of $Ce^{+4}$). Since it is generally assumed that lattice oxygen is responsible for the catalytic oxidation of carbon monoxide, the presence of multiple oxidation states for both Pt and Ce suggests that these metals may participate in a redox mechanism. The corresponding 2p ESCA spectrum for Ti indicated only a single oxidation state. The Ti $2p_{3/2}$ peak at 458.4 eV and the Ti $2p_{1/2}$ peak at 464.1 eV were associated with the $Ti^{+4}$ oxidation state of $TiO_2$.

This catalytic composite was tested for laser activity as described in Example 3.

EXAMPLE 3

This example describes the evaluation of the catalytic composites of the present invention with an integral flow reactor system incorporating real time analysis of CO and $O_2$.

Separate tests were performed for each of the catalytic composites prepared as described in Examples 1 and 2. The catalytic composite was placed in a low flow catalyst test station, comprising a catalytic reactor and appropriate gas sources and valves for flowing a predetermined gas mixture over the catalyst at a selected flow rate. The gas stream output from the reactor was introduced into a gas analysis device.

The reactor was fabricated from standard wall Pyrex tubing having an inner diameter of nominally 0.5 inches (1.27 cm) and a length of 15 inches (38.1 cm). The catalyst pellets were charged to the reactor together with Pyrex spheres (1/8 inch or 0.32 cm in diameter) which served to minimize radial temperature gradients. The catalyst zone was held in place by plugs of Pyrex wool. The catalyst bed temperature was monitored with a sub-miniature type K sheathed thermocouple. The reactor was oriented vertically.

A certified gas mixture having a composition of 0.5% oxygen, 1.0% CO, 17% nitrogen, 17% $CO_2$ and the balance helium was used for routine catalyst evaluation. Other gases including hydrogen, carbon monoxide, oxygen and helium were also deliverable for special processes, such as catalyst conditioning. The combination of high precision rotameters (Fisher Porter Model 10A3555) and individually calibrated mass flow controllers (Tylan Model FC-280) allowed for accurate and reproducible gas flow rates and the synthesis of special gas blends. The system pressure was monitored by an absolute pressure transducer/indicator. For real time gas analysis, a specifically tuned Beckman Industrial nondispersive infrared analyzer (Model 868) was used for CO analysis, while a Beckman oxygen analyzer (Model 755A) monitored oxygen levels.

The catalytic activity for both CO and $O_2$ removal was calculated as previously described. These results are shown in FIGS. 1 and 2, previously discussed.

In addition, these catalytic composites were found to be stable when stored in a laser gas mix, such as $CO_2$, CO, $O_2$, $N_2$, and helium, and did not produce undesirable dust.

EXAMPLE 4

This example illustrates a carbon dioxide laser system incorporating the method and catalytic composites of the present invention.

A sealed modular transversely excited (TE) $CO_2$ laser was used to investigate catalytic performance. The transmitter used a corona discharge for preionization with transverse gas flow. The modular approach was chosen to allow for both a compact 1 to 3 Hz source or a 100 Hz device with the straightforward addition of a flow module. The fully integrated, closed cycle modular laser assembly consisted of a potted pulse-forming network, discharge module and optical bench, a side mounted catalyst/heat exchanger section, and a tangetial fan. This system is described by D.B. Cohn et al, in the publication entitled "Compact High Repetition Rate $CO_2$ TEA Lasers," SPIE, 1042, $CO_2$ Lasers and Applications, 1989, pages 63-69.

Using the $Pt/Ce/TiO_2$ catalytic composite, prepared as described in Example 2, the laser was tested for extended periods of time at a 100 hertz repetition rate, using a catalyst volume of approximately 60 ml. Typically, the laser was operated for several hours at a time, turned off overnight, and restarted the next day. The test results were as follows:

(a) 100 Hz repetition rate
(b) 80 mJ/pulse, no fall-off over time
(c) 1 MW peak power
(d) $5 \times 10^6$ total shots
(e) 75 to 95°C catalyst temperature
(f) Operation with $^{12}C^{16}O_2$ or $^{13}C^{16}O_2$.

Additional tests were performed on the $Pt/TiO_2$ catalytic composite of the present invention which was prepared as described in Example 1. A TE carbon dioxide laser operating at 150 hertz was used. The catalytic composite of the present invention was placed in a catalyst bed located within the laser envelope and having a volume of 60 ml. The catalyst bed was maintained at a temperature of 100-150°C. The laser was operated for a period of 9.3 hours ($5 \times 10^6$ pulses) and exhibited no degradation in performance as evidenced by essentially constant laser output power and no visibly noticeable change in the appearance of the discharge.

From the previous discussion it can be seen that the present invention provides an improved method for reacting carbon monoxide and oxygen to form carbon dioxide at a low temperature, within the range of about 50 to 150°C. Thus, undesirable temperature effects, such as heat generation and distortion of optical or structural elements, are avoided. In addition, the catalytic composites used in the present method are effective for converting carbon monoxide and oxygen to carbon dioxide at low oxygen concentrations and in the presence of high concentrations of carbon dioxide. Moreover, the catalytic composite used in the present method is stable in a carbon dioxide laser gas mix, is not prone to contamination, and does not require special processing for decontamination, as some prior catalysts do. Further, the present catalytic composite produces no significant dust which would degrade surrounding optical elements. Because of all these features, the present catalytic composite is especially well suited for use in a sealed carbon dioxide laser system. However, it is to be understood that it is not intended to limit the present invention to such laser systems. Rather, it is intended that the present method be used for the reaction of CO and $O_2$ to form $CO_2$ in any application where low temperatures on the order of 50 to 150°C are required or desired.

Having thus described exemplary embodiments of the present invention, it should be noted by those skilled in the art that the within disclosures are exemplary only.

## Claims

1. A method for preparing a titania-supported platinum/cerium catalyst to catalyse the reaction of carbon monoxide (CO) and oxygen ($O_2$) to form carbon dioxide at a temperature within the range of 50 to 150°C wherein said $O_2$ is present at or below a stoichiometric amount by exposing said CO and $O_2$ at said temperature to a catalytic composite wherein the improvement comprises the steps of:
   (i) providing titania in the form of a porous structure having an average pore diameter within the range of 0.005 to 0.04 micrometers;
   (ii) impregnating said titania substrate with a solution comprising a chloride-free chemical complex of platinum and a chloride free cerium salt to form a wetted impregnated substrate having uniform distribution of said nobel metal throughout said substrate;
   (iii) drying said wetted impregnated substrate in air;
   (iv) exposing said dried impregnated substrate to flowing helium at about 200°C to form an activated catalytic composite; and
   (v) exposing said activated catalytic composite to flowing oxygen at about 400°C,
   whereby said catalytic composite possesses catalytic activity throughout said porous structure of said substrate to thereby enhance said catalytic activity.

2. A method as set forth in claim 1 wherein said substrate comprises pellets.

3. A method as set forth in claim 1 and/or 2 wherein said catalytic composite comprises 0.1 to 5 percent by weight of platinum and 1 to 2 percent by weight of cerium or of an oxide of cerium of said composite.

4. A method as set forth in any of claims 1-3 wherein said titania comprises about 90 percent anatase phase and about 10 percent rutile phase.

5. A method as set forth in any of claims 1-4 wherein said catalyst further comprises a metal selected from the group consisting of nickel, copper, and manganese.

6. A carbon dioxide laser system comprising: (a) a sealed cavity for containing said carbon dioxide; (b) means for exciting said carbon dioxide to produce laser radiation therefrom, whereby carbon monoxide and oxygen by-products are formed; and (c) catalyst means located with said cavity for converting said carbon monoxide and oxygen to carbon dioxide, wherein the improvement comprises said catalyst means is prepared by the method of any of claims 1-5.

7. A titania-supported platinum/cerium catalytic composite for reacting carbon monoxide (CO) and oxygen ($O_2$) to form carbon dioxide at a temperature within the range of 50 to 150°C wherein said $O_2$ is present at or below a stoichiometric amount comprising:
   (a) a catalyst comprising of platinum metal and cerium metal or oxide of cerium; and
   (b) a titania substrate supporting said catalyst, said catalytic composite being prepared by a process comprising the steps of:
       (i) providing said titania in the form of a porous structure having an average pore diameter within the range of 0.005 to 0.04 micrometers;

(ii) impregnating said titania substrate with a solution comprising a chloride-free chemical complex of platinum and a chloride free cerium salt to form a wetted impregnated substrate having uniform distribution of said metals throughout said substrate;

(iii) drying said wetted impregnated substrate in air;

(iv) exposing said dried impregnated substrate to flowing helium at about 200°C to form an activated catalytic composite; and

(v) exposing said activated catalytic composite to flowing oxygen at about 400°C, whereby said catalytic composite possesses catalytic activity throughout said porous structure of said substrate to thereby enhance said catalytic activity.

8. A catalytic composite as set forth in claim 7 wherein said substrate comprises pellets.

9. A catalytic composite as set forth in claim 7 and/or 8 comprising 0.1 to 5 percent by weight of platinum and cerium or of an oxide of cerium.

10. A catalytic composite as set forth in any of claims 7-9 wherein said titania comprises about 90 percent anatase phase and about 10 percent rutile phase.

11. A catalytic composite as set forth in any of claimsb 7-10 further comprising a metal selected from the group consisting of nickel, copper, and manganese.

**Patentansprüche**

1. Verfahren zum Herstellen eines von Titandioxid getragenen Platin/Cer-Katalysators, um die Reaktion von Kohlenmonoxid (CO) und Sauerstoff (O$_2$) zur Bildung von Kohlendioxid bei einer Temperatur in dem Bereich von 50 bis 150°C zu katalysieren, wobei das O$_2$ in oder unterhalb einer stöchiometrischen Menge vorhanden ist, indem das CO und O$_2$ bei der Temperatur einem katalytischen Verbundstoff ausgesetzt werden, wobei die Verbesserung die folgenden Schritte umfaßt:

(i) Zur-Verfügung-Stellen von Titandioxid in der Form einer porösen Struktur, mit einem Durchschnitts-Porendurchmesser in dem Bereich von 0,005 bis 0,04 Mikrometern;

(ii) Imprägnieren des Titandioxidsubstrates mit einer Lösung, welche einen chloridfreien chemischen Platinkomplex und ein chloridfreies Cersalz umfaßt, um ein angefeuchtetes imprägniertes Substrat mit einer gleichmäßigen Verteilung des Edelmetalls durch das Substrat hindurch zu bilden;

(iii) Trocknen des angefeuchteten imprägnierten Substrates an der Luft;

(iv) Aussetzen des getrockneten imprägnierten Substrates bei ca. 200°C an fließendes Helium, um einen aktivierten katalytischen Verbundstoff zu bilden; und

(v) Aussetzen des aktivierten katalytischen Verbundstoffs bei ca. 400°C an fließenden Sauerstoff, wodurch der katalytische Verbundstoff über die poröse Struktur des Substrates hinweg katalytische Aktivität besitzt, um dadurch die katalytische Aktivität zu vergrößern.

2. Verfahren gemäß Anspruch 1, wobei das Substrat Pellets umfaßt.

3. Verfahren gemäß Anspruch 1 und/oder 2, wobei der katalytische Verbundstoff 0,1 bis 5 Gewichtsprozent Platin und 1 bis 2 Gewichtsprozent Cer oder ein Ceroxid des Verbundstoffs umfaßt.

4. Verfahren gemäß einem der Ansprüche 1 bis 3, wobei das Titandioxid ca. 90 Prozent Anatasphase und ca. 10 Prozent Rutilphase umfaßt.

5. Verfahren gemäß einem der Ansprüche 1 bis 4, wobei der Katalysator weiterhin ein Metall, ausgewählt aus der Gruppe bestehend aus Nickel, Kupfer und Mangan, umfaßt.

6. Kohlendioxid-Lasersystem, umfassend:

(a) einen abgedichteten Hohlraum, um das Kohlendioxid aufzunehmen;

(b) Mittel, um das Kohlendioxid anzuregen, um daraus Laserstahlung zu erzeugen, wodurch Kohlenmonoxid und Sauerstoff-Nebenprodukte gebildet werden; und

(c) Katalysator-Mittel, welche in dem Hohlraum angeordnet sind, um das Kohlenmonoxid und den Sauerstoff zu Kohlendioxid umzuwandeln, wobei die Verbesserung umfaßt, daß das Katalysator-Mittel durch das Verfahren nach einem der Ansprüche 1 bis 5 hergestellt wird.

**7.** Katalytischer von Titandioxid getragener Platin/Cer-Verbundstoff zum Umsetzen von Kohlenmonoxid (CO) und Sauerstoff ($O_2$), um bei einer Temperatur in dem Bereich von 50 bis 150°C Kohlendioxid zu bilden, wobei das $O_2$ in oder unterhalb einer stöchiometrischen Menge vorhanden ist, umfassend:

(a) einen Katalysator, welcher Platinmetall und Cermetall oder Ceroxid umfaßt; und

(b) ein Titandioxidsubstrat, welches den Katalysator trägt, wobei der katalytische Verbundstoff durch ein Verfahren hergestellt wird, welches die folgenden Schritte umfaßt:

(i) Zur-Verfügung-Stellen des Titandioxids in der Form einer porösen Struktur, mit einem Durchschnitts-Porendurchmesser in dem Bereich von 0,005 bis 0,04 Mikrometern;

(ii) Imprägnieren des Titandioxidsubstrates mit einer Lösung, welche einen chloridfreien chemischen Platinkomplex und ein chloridfreies Cersalz umfaßt, um ein angefeuchtetes imprägniertes Substrat mit einer gleichmäßigen Verteilung des Edelmetalls durch das Substrat hindurch zu bilden;

(iii) Trocknen des angefeuchteten imprägnierten Substrates an der Luft;

(iv) Aussetzen des getrockneten imprägnierten Substrates bei ca. 200°C an fließendes Helium, um einen aktivierten katalytischen Verbundstoff zu bilden; und

(v) Aussetzen des aktivierten katalytischen Verbundstoffs bei ca. 400°C an fließenden Sauerstoff, wodurch der katalytische Verbundstoff über die poröse Struktur des Substrates hinweg katalytische Aktivität besitzt, um dadurch die katalytische Aktivität zu vergrößern.

**8.** Katalytischer Verbundstoff gemäß Anspruch 7, wobei das Substrat Pellets umfaßt.

**9.** Katalytischer Verbundstoff gemäß Anspruch 7 und/oder 8, welcher 0,1 bis 5 Gewichtsprozent an Platin und Cer oder einem Ceroxid umfaßt.

**10.** Katalytischer Verbundstoff gemäß einem der Ansprüche 7 bis 9, wobei das Titandioxid ca. 90 Prozent Anatasphase und ca. 10 Prozent Rutilphase umfaßt.

**11.** Katalytischer Verbundstoff gemäß einem der Ansprüche 7 bis 10, welcher weiterhin ein Metall, ausgewählt aus der Gruppe bestehend aus Nickel, Kupfer und Mangan, umfaßt.

**Revendications**

**1.** Procédé de préparation d'un catalyseur au platine/cérium fixé sur un support d'oxyde de titane, destiné à catalyser la réaction de l'oxyde de carbone (CO) et de l'oxygène ($O_2$) pour la formation d'anhydride carbonique à une température comprise dans l'intervalle de 50 à 150°C, dans lequel ledit $O_2$ est présent en une quantité égale ou inférieure à une quantité stoechiométrique, par mise en contact dudit CO et dudit $O_2$ à ladite température avec un composé catalytique, dans lequel le perfectionnement comprend les étapes consistant :

(i) à utiliser l'oxyde de titane sous forme d'une structure poreuse ayant un diamètre moyen des pores compris dans l'intervalle de 0,005 à 0,04 micromètre ;

(ii) à imprégner ledit substrat constitué d'oxyde de titane avec une solution comprenant un complexe chimique, sans chlorures, de platine et d'un sel de cérium sans chlorures pour former un substrat imprégné mouillé présentant une distribution uniforme dudit métal noble dans la totalité dudit substrat ;

(iii) à sécher dans l'air ledit substrat imprégné mouillé ;

(iv) à exposer ledit substrat imprégné séché à un courant d'hélium à une température d'environ 200°C pour former un composite catalytique activé ; et

(v) à exposer ledit composite catalytique activé à un courant d'oxygène à une température d'environ 400°C,

ledit composite catalytique possédant ainsi une activité catalytique dans la totalité de ladite structure poreuse dudit substrat pour accroître ainsi ladite activité catalytique.

**2.** Procédé suivant la revendication 1, dans lequel le substrat est constitué de pastilles.

**3.** Procédé suivant la revendication 1 et/ou la revendication 2, dans lequel le composite catalytique comprend 0,1 à 5 pour cent en poids de platine et 1 à 2 pour cent en poids de cérium ou d'un oxyde de cérium, sur la base dudit composite.

**4.** Procédé suivant l'une quelconque des revendications 1 à 3, dans lequel l'oxyde de titane comprend environ 90 pour cent de phase d'anatase et environ 10 pour cent de phase de rutile.

**5.** Procédé suivant l'une quelconque des revendications 1 à 4, dans lequel le catalyseur comprend en outre un métal choisi dans le groupe consistant en nickel, cuivre et manganèse.

**6.** Dispositif à laser à anhydride carbonique, comprenant : (a) une cavité hermétiquement close destinée à contenir ledit anhydride carbonique ; (b) un moyen d'excitation dudit anhydride carbonique pour produire un rayonnement laser à partir de celui-ci, ce qui provoque la formation de sous-produits consistant en oxyde de carbone et oxygène ; et (c) un moyen catalytique logé dans ladite cavité pour transformer ledit oxyde de carbone et ledit oxygène en anhydride carbonique, dans lequel le perfectionnement comprend la préparation dudit moyen catalytique par le procédé suivant l'une quelconque des revendications 1 à 5.

**7.** Composite catalytique au platine/cérium fixé sur un support d'oxyde de titane, destiné à la réaction d'oxyde de carbone (CO) et d'oxygène ($O_2$) pour former de l'anhydride carbonique à une température comprise dans l'intervalle de 50 à 150°C, dans lequel ledit $O_2$ est présent en une quantité égale ou inférieure à une quantité stoechiométrique, comprenant :
  (a) un catalyseur comprenant du platine métallique et du cérium métallique ou de l'oxyde de cérium ;
  (b) un substrat constitué d'oxyde de titane servant de support audit catalyseur, ledit composite catalytique étant préparé par un procédé comprenant les étapes consistant :
    (i) à utiliser ledit oxyde de titane sous forme d'une structure poreuse ayant un diamètre moyen des pores compris dans l'intervalle de 0,005 à 0,04 micromètre ;
    (ii) à imprégner ledit substrat constitué d'oxyde de titane avec une solution comprenant un complexe chimique, sans chlorures, de platine et d'un sel de cérium sans chlorures pour former un substrat imprégné mouillé présentant une distribution uniforme desdits métaux dans la totalité dudit substrat ;
    (iii) à sécher dans l'air ledit substrat imprégné mouillé ;
    (iv) à exposer ledit substrat imprégné séché à un courant d'hélium à une température d'environ 200°C pour former un composite catalytique activé ; et
    (v) à exposer ledit composite catalytique activé à un courant d'oxygène à une température d'environ 400°C,
  ledit composite catalytique possédant ainsi une activité catalytique dans la totalité de ladite structure poreuse dudit substrat pour accroître ainsi ladite activité catalytique.

**8.** Composite catalytique suivant la revendication 7, dans lequel le substrat est constitué de pastilles.

**9.** Composite catalytique suivant la revendication 7 et/ou la revendication 8, comprenant 0,1 à 5 pour cent en poids de platine et de cérium ou d'un oxyde de cérium.

**10.** Composite catalytique suivant l'une quelconque des revendications 7 à 9, dans lequel l'oxyde de titane comprend environ 90 pour cent de phase d'anatase et environ 10 pour cent de phase de rutile.

**11.** Composite catalytique suivant l'une quelconque des revendications 7 à 10, comprenant en outre un métal choisi dans le groupe consistant en nickel, cuivre et manganèse.

Fig.1.

Fig.2.

Fig. 3.